# DEMANDE DE BREVET EUROPEEN

(11) **EP 1 875 817 A1**
(43) Date de publication de la demande: **09.01.2008**
(21) Numéro de dépôt: 06300774.4
(22) Date de dépôt: 07.07.2006
(51) Int. Cl.: A23L 2/54, B01D 3/00, B01D 19/00

(54) **Procédé d'abaissement du potentiel redox d'un liquide par injection d'un gaz en évitant le phénomène de moussage**

(71) Demandeur: L'AIR LIQUIDE, Société Anonyme pour l'Etude et l'Exploitation des Procédés Georges Claude, 75007 Paris (FR)
(72) Inventeur: Jallais, Simon, 92370, Chaville (FR); Ibarra, Dominique, 91190, Gif sur Yvette (FR)
(74) Mandataire: Mellul-Bendelac, Sylvie Lisette

(57) **Abrégé**

Selon l'invention, on réalise le contact entre le liquide à traiter et le mélange gazeux dans une colonne, parcourue simultanément par chacun des deux fluides.

## Description

L'invention concerne le domaine du traitement de liquides alimentaires, à l'aide de mélanges gazeux.

A titre illustratif, des travaux effectués par la Demanderesse ont montré qu'il peut être intéressant d'injecter un mélange gazeux à base d'un gaz inerte ou encore à base d'un gaz réducteur comme l'hydrogène dans différents milieux liquides, notamment alimentaires, afin d'en abaisser le potentiel redox. On peut citer les exemples suivants :
- Injection dans un produit fini tel que par exemple le jus d'orange ou tout autre jus de fruits. On peut ainsi améliorer la conservation du produit en luttant contre les réactions d'oxydation (limitation du brunissement, préservation de la vitamine C...)
- Injection dans des produits liquides intermédiaires au cours du procédé de fabrication. On peut par exemple injecter le mélange gazeux dans du lait, enrichi ou non en protéines, qui sert de base à la fabrication de yaourts, fromages et autres produits laitiers. Les propriétés sensorielles du produit s'en trouvent modifiées (arômes, texture...).
- Injection dans un milieu de fermentation destiné à la production de biomasse ou de molécules d'intérêt. La physiologie et le métabolisme des micro-organismes peuvent ainsi être contrôlés.

Or, force est de constater que bien souvent, l'injection directe de gaz dans le liquide (barbotage) pose de sérieux problèmes de moussage. C'est par exemple le cas pour les jus d'orange, les boissons à base de thé, ainsi que le lait. La présence de protéines dans le milieu est, selon toute vraisemblance, responsable d'une partie du phénomène.

Or il faut savoir que ce problème de fort moussage entraîne de nombreux désagréments, tels que notamment des pertes matière, des difficultés de conditionnement, ainsi qu'un encrassement de l'installation de production.

On peut signaler que la littérature existante propose un certain nombre de solutions au problème technique ci-dessus évoqué.

Une des solutions actuellement proposée pour éviter la formation de mousse pendant la fabrication de produits alimentaires ou bien dans les fermenteurs (pendant l'agitation par exemple), est d'ajouter des agents anti-mousse tels que par exemple le polyéthylèneglycol ou bien des polysorbates (E 432 à E436), afin d'abaisser la tension superficielle. Cet ajout d'additifs présente plusieurs inconvénients. Il doit notamment figurer sur l'étiquetage du produit fini alors même qu'il véhicule une image négative de produit non naturel auprès du consommateur. De plus ces additifs ne sont par toujours sensoriellement neutres. Enfin ils sont parfois tout simplement interdits dans certains produits par la législation. Ainsi par exemple la législation européenne n'autorise pas l'utilisation d'autres additifs que l'acide ascorbique (E300) ou l'acide citrique (E330) dans les jus de fruits.

D'autres solutions peuvent être utilisées telles que par exemple une action mécanique ou la pression pour casser la mousse qui se forme dans une cuve, mais ces techniques ne permettent pas de traiter un liquide en continu et trouvent leur limite dans le cadre de liquides à traiter particulièrement moussants.

On constate donc un réel besoin de pouvoir disposer d'une solution améliorée de traitement gazeux de liquides alimentaires en vue d'en faire baisser le potentiel redox, qui n'entraîne pas de formation de mousses, qui soit sensoriellement neutre, et acceptable en terme de législation. Une telle solution pour être satisfaisante devra bien sur permettre un traitement en continu seul compatible avec les applications industrielles.

On souhaite alors proposer selon la présente invention un appareil permettant d'exposer un tel liquide à un mélange gazeux en continu en s'affranchissant des phénomènes de moussage afin d'améliorer les qualités sensorielles du liquide ainsi traité. Un autre des objectifs de la présente invention est de proposer un appareil permettant une injection optimisée réduisant les consommations du gaz associées au traitement.

Comme on le verra plus en détails dans ce qui suit, l'invention se propose de changer la surface d'échange entre le gaz et le liquide par rapport à ce qui est traditionnellement réalisé lors d'un bullage classique.

Pour cela, l'échange entre le gaz et le liquide à traiter est réalisé dans une colonne que l'on fait parcourir par le gaz et le liquide, selon différentes configurations envisageables, parmi lesquelles :
- le parcours des deux fluides peut avoir lieu dans la colonne à co ou contre-courant :
   A titre d'exemple, le liquide est injecté en haut de la colonne et coule vers le bas par gravité, alors que le mélange de gaz est injecté en bas de la colonne et monte à contre-courant du flux du liquide.
- la colonne peut être pleine d'un matériau (par exemple un garnissage structuré ou même désordonné tel que des anneaux, des billes, cylindres ou autres formes géométriques dont la taille sera déterminée en fonction du dimensionnement de la colonne) ou bien elle peut être vide de tout matériau et l'échange se fait alors soit à la surface de gouttelettes du liquide tombant en pluie fine dans la colonne, soit à la surface du film coulant de haut en bas par gravité le long des parois de la colonne alors que le gaz actif est injecté en bas de la colonne et s'écoule à contre-courant vers le haut à l'intérieur du tube.

Il faut noter que si l'on peut traiter avec la colonne un liquide dans sa globalité, on pourrait également mettre en oeuvre l'invention en traitant dans la colonne tout ou partie des constituants du liquide, de façon séparée. Ainsi dans le cas d'un jus de fruits, on peut par exemple ne traiter que l'eau entrant dans sa composition, ou bien traiter selon l'invention l'eau mais également le concentré séparément, et y ajouter éventuellement de la pulpe ultérieurement.

Selon une des mises en oeuvre avantageuse de l'invention, on met en oeuvre un système de recyclage du liquide (boucle sur le liquide) afin d'obtenir de très faibles valeurs du potentiel redox du liquide traité.

Le liquide est alors récupéré en bas de colonne et réinjecté en entrée de colonne afin de subir à nouveau le traitement. Ce principe permet d'augmenter la capacité de traitement en tenant compte de la variabilité du produit à traiter (valeur redox initiale, viscosité etc...).

Selon une autres des mises en oeuvre avantageuse de l'invention, afin de limiter les consommations de gaz, il est proposé d'associer au procédé de traitement en continu du liquide, un système de recyclage et/ou séparation des gaz pouvant comprendre les éléments suivants :
- Un surpresseur de gaz (pouvant être un compresseur ou un ventilateur) permettant de créer une recirculation du gaz actif entre la sortie et l'entrée de la colonne de traitement.
- L'oxygène pouvant s'accumuler dans la boucle, il est proposé d'y associer un système de de-oxygénation catalytique du flux recirculé de gaz actif (par exemple de type DEOXO basé sur la combustion de l'oxygène gênant en présence d'hydrogène catalysé par des métaux nobles).
- D'autres composés néfastes au traitement pouvant s'accumuler dans la boucle de recirculation, il est proposé d'y ajouter une membrane polymère de séparation de gaz. Dans le cas de l'utilisation d'hydrogène, l'hydrogène ayant une perméabilité supérieure aux autres composés potentiellement gazeux présents dans le flux de recyclage, il est séparé côté perméat avec une grande pureté. Celui-ci pourra ensuite être mélangé à un gaz porteur inerte (N₂, Ar, He, CO₂ ...ou un mélange de ces gaz) afin de maintenir une teneur acceptable en hydrogène (c'est-à-dire inférieur à la limite inférieur d'inflammabilité de l'hydrogène dans l'air) à l'entrée du procédé de traitement des liquides en continu. La force d'adsorption de l'hydrogène étant typiquement plus faible que celle des autres composés présents dans le flux de recyclage, la séparation de l'hydrogène pourrait également être réalisée par adsorption.

D'autres caractéristiques et avantages de l'invention apparaîtront à la lecture de la description qui va suivre. Des formes et des modes de réalisation de l'invention sont donnés à titre d'exemples non limitatifs, illustrés par les dessins joints dans lesquels:
- la Figure 1 fournit deux exemples de colonnes convenant pour la mise en oeuvre de l'invention (respectivement pleine et vide de tout matériau)
- la Figure 2 fournit un exemple d'installation de mise en oeuvre de l'invention pour traiter du jus d'orange et intégrant un recyclage du gaz.

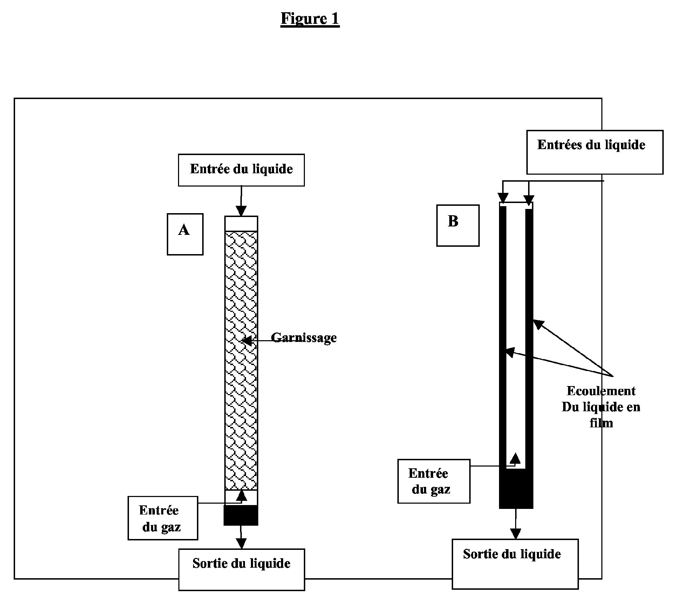

La partie gauche de la figure 1 ("A") illustre le cas d'une colonne remplie d'un garnissage structuré (garnissage de chez Sulzer, ref. 2118458 ALDX-Wo5 186C, inox 316L) dans laquelle on fait circuler les deux fluides à contre-courant : le liquide à traiter (par exemple un jus d'orange) circule de haut en bas.

Le parcours des deux fluides peut avoir lieu dans la colonne à co ou contre-courant, à titre d'exemple, pour le mode de la figure 1A, le liquide est injecté en haut de la colonne et coule vers le bas par gravité, alors que le mélange de gaz est injecté en bas de la colonne et monte à contre-courant du flux du liquide.

La colonne peut être pleine d'un matériau (par exemple un garnissage structuré ou même désordonné tel que des anneaux, des billes, cylindres ou autres formes géométriques de petites tailles) ou bien elle peut être vide de tout matériau et l'échange liquide/gaz se fait par l'écoulement du liquide en film de haut en bas par gravité le long des parois de la colonne alors que le gaz actif est injecté en bas de la colonne et s'écoule à contre-courant vers le haut à l'intérieur du tube, ou bien encore à la surface de gouttelettes tombant en pluie fine dans la colonne.

On décrit dans ce qui suit les résultats d'un premier exemple de mise en oeuvre de l'invention sur du jus d'orange.

Le jus d'orange est en effet un milieu qui mousse énormément lorsqu'il est balayé par un gaz selon des moyens traditionnellement utilisés (balayage à l'aide d'un fritté), même à faible débit de gaz (par exemple 0,03 volume de gaz par volume de liquide et par minute).

On a utilisé ici une colonne en verre de laboratoire dont l'intérieur était équipé d'éléments en verre en forme de ressort (forme de type « queues de cochon » ou « tire bouchon ») a été utilisée.

Le mélange gazeux de traitement utilisé était le suivant : N₂/H₂ (96 % - 4%).

Le potentiel redox (Eh) initial du jus d'orange était de 215mV.

La mise en contact du jus d'orage avec le mélange gazeux dans la colonne a été effectuée à contre-courant.

Dans de telles conditions de mise en oeuvre, il a été possible d'abaisser le potentiel redox du jus d'orange à des valeurs d'environ - 300mV sans formation de mousse (voir Table 1 ci-dessous), ce qui n'est absolument pas possible selon une injection traditionnelle à l'aide d'un fritté.

**Table 1 : Résultats de modification du potentiel redox d'un jus d'orange selon l'exemple 1.**

| Débit gaz (ml/min) | Débit jus d'orange maxi (min) | Eh final (mV) |
|---|---|---|
| 142 | 162 | -270 |
| 340 | 112 | -327 |

On peut penser que grâce à la mise en oeuvre de l'invention, le liquide est mis en contact avec le gaz sous la forme d'un film. Il n'y a donc pas intrusion de bulles de gaz dans le liquide à traiter.

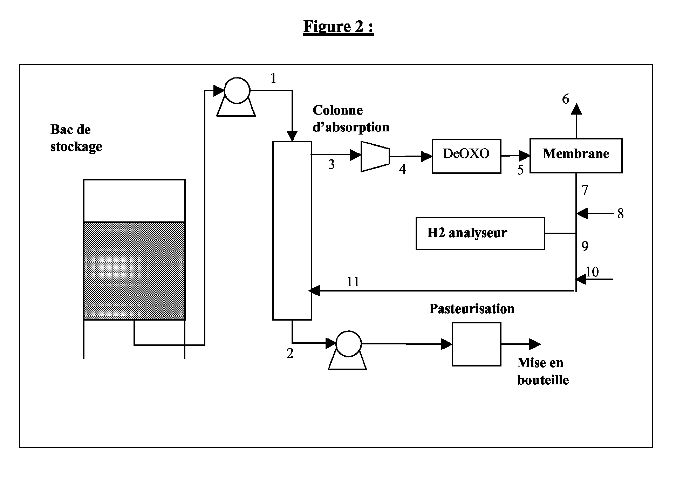

La Figure 2 fournit un exemple d'installation de mise en oeuvre de l'invention pour traiter du jus d'orange et intégrant un recyclage du gaz.

Le jus d'orange contenu dans un bac de stockage est pompé jusqu'à la colonne d'absorption liquide gaz fonctionnant ici à contre-courant. Le flux 1 contenant du jus d'orange (naturellement oxygéné) est traité dans la colonne par le flux de gaz 11 (4% H₂ - 96 % N₂) et ressort (2) en bas de la colonne ainsi traité et notamment désoxygéné.

Le gaz (10) ressort par le haut de la colonne (3) puis est comprimé à une pression inférieure à 5 bars (4). Ce flux 4 est traité par un réacteur de désoxygénation permettant d'éliminer de ce mélange gazeux l'oxygène désorbé au sein de la colonne, désoxygénation selon la réaction H₂ +½ O₂ -- > H₂O.

Le flux 5 exempt d'oxygène est traité par une membrane polymérique permettant d'obtenir un flux 7 contenant essentiellement de l'hydrogène et un flux 6 contenant le gaz de purge du procédé.

De l'azote « frais » (flux 8), provenant préférentiellement d'un stockage cryogénique, est ajouté au flux 7 pour amener la teneur du flux en hydrogène à 4 %.

Afin d'éviter des diminutions de débit de gaz à traiter, un flux 10 contenant un mélange H₂ - N₂ vient s'additionner au flux 9 pour former le flux 11 contenant H₂ (4%) - N₂ (QS).

On donne dans ce qui suit une description concernant un second exemple de mise en oeuvre.

Cinq liquides (Il s'agit d'eau, de jus d'orange à base de concentré, de pur jus d'orange, de jus de pamplemousse à base de concentré, et d'une boisson à base de thé) ont été traités avec une colonne conforme à l'invention dans les conditions suivantes :
- un garnissage vrac de type anneaux Raschig en inox 316,
- débit de liquide : 200 l/h,
- passage d'un mélange N₂/H₂ (96/4) dans la colonne à co-courant, ratio Gaz/Liquide de 1/1.

Les valeurs de redox mesurées (Ehm) à l'aide d'une sonde Mettler Toledo avant et après le traitement selon l'invention sont présentées dans la table 2 ci-dessous.

Dans de telles conditions de mise en oeuvre, il a été possible d'abaisser le potentiel redox des liquides traités à des valeurs de potentiel redox souhaitées, sans formation de mousse, ce qui ici encore n'est absolument pas possible selon une injection traditionnelle à l'aide d'un fritté.

**Table 2 : Résultats de la modification du potentiel redox de différents liquides**

| **Liquide traité** | **Ehm initial** | **Ehm final** |
|---|---|---|
| Eau | + 310 mV | - 450 mV |
| Jus d'orange à base de concentré | + 230 mV | - 385 mV |
| Pur jus d'orange | + 235 mV | - 360 mV |
| Jus de pamplemousse à base de concentré | + 250 mV | - 350 mV |
| Boisson à base de thé | + 370 mV | - 350 mV |

## Revendications

1. Procédé de traitement d'un liquide alimentaire à l'aide d'un mélange gazeux visant à injecter le mélange gazeux dans le liquide afin d'en abaisser le potentiel redox en évitant le phénomène de moussage, **caractérisé en ce que** l'on réalise le contact entre le liquide à traiter et le mélange gazeux dans une colonne, parcourue simultanément par chacun des deux fluides.

2. Procédé de traitement d'un liquide alimentaire selon la revendication 1, **caractérisé en ce que** le liquide et le mélange gazeux parcourent la colonne à co-courant.

3. Procédé de traitement d'un liquide alimentaire selon la revendication 1, **caractérisé en ce que** le liquide et le mélange gazeux parcourent la colonne à contre-courant.

4. Procédé de traitement d'un liquide alimentaire selon la revendication 1 ou 2, **caractérisé en ce que** la colonne est une structure vide de tout matériau et **en ce que** l'échange liquide/gaz se fait alors selon l'un ou chacun des modes suivants : à la surface de gouttelettes dudit liquide tombant en pluie dans la colonne, ou par l'écoulement du liquide en film de haut en bas par gravité le long des parois de la colonne alors que le mélange gazeux est injecté en bas de la colonne et s'écoule à contre-courant vers le haut à l'intérieur de la colonne.

5. Procédé de traitement d'un liquide alimentaire selon l'une des revendications 1 à 3, **caractérisé en ce** la colonne est au moins partiellement pleine d'un matériau de garnissage, structuré ou désordonné, et en ce que l'échange liquide/gaz se fait au sein du garnissage.

6. Procédé de traitement d'un liquide alimentaire selon l'une des revendications précédentes, **caractérisé en ce que** le liquide alimentaire traité est un jus de fruit.

7. Procédé de traitement d'un liquide alimentaire selon l'une des revendications 1 à 5, **caractérisé en ce que** le liquide alimentaire traité est de l'eau, entrant dans la composition d'un jus de fruit.

8. Procédé de traitement d'un liquide alimentaire selon l'une des revendications précédentes, **caractérisé en ce que** le mélange gazeux de traitement est de l'hydrogène ou un mélange comportant de l'hydrogène.

9. Procédé de traitement d'un liquide alimentaire selon l'une des revendications 1 à 7, **caractérisé en ce que** le mélange gazeux de traitement est un mélange d'hydrogène et de dioxyde de carbone.

10. Procédé de traitement d'un liquide alimentaire selon l'une des revendications 1 à 7, **caractérisé en ce que** le mélange gazeux de traitement comprend de l'hydrogène et un gaz complémentaire acceptable du point de vue dudit liquide à traiter.

11. Procédé de traitement d'un liquide alimentaire selon la revendication 10, **caractérisé en ce que** le gaz complémentaire est choisi parmi les gaz inertes, notamment argon, hélium, et parmi le dioxyde de carbone et le protoxyde d'azote et leurs mélanges en toutes proportions.

12. Procédé de traitement d'un liquide alimentaire selon l'une des revendications précédentes, **caractérisé en ce que** la valeur du potentiel redox atteinte après traitement est négative.

13. Procédé de traitement d'un liquide alimentaire selon l'une des revendications précédentes, **caractérisé en ce que** la valeur du potentiel redox atteinte après traitement est inférieure d'au moins 100 mV à la valeur initiale du liquide avant traitement.

## Revendications modifiées

### Revendications modifiées conformément à la règle 137(2) CBE.

**1.** Procédé de traitement d'un liquide alimentaire à l'aide d'un mélange gazeux visant à injecter le mélange gazeux dans le liquide afin d'en abaisser le potentiel redox, en évitant le phénomène de moussage, **caractérisé en ce que** l'on réalise le contact entre le liquide à traiter et le mélange gazeux dans une colonne, parcourue simultanément par chacun des deux fluides, selon l'une des mises en oeuvre suivante de manière à éviter l'intrusion de bulles de gaz dans le liquide à traiter :
- la colonne est une structure vide de tout matériau et l'échange liquide/gaz se fait :
i) à la surface de gouttelettes dudit liquide tombant en pluie dans la colonne, le liquide et le mélange gazeux parcourant la colonne à co-courant ou à contre-courant, ou
j) par l'écoulement du liquide en film de haut en bas par gravité le long des parois de la colonne alors que le mélange gazeux est injecté en bas de la colonne et s'écoule à contre-courant vers le haut à l'intérieur de la colonne.
- la colonne est au moins partiellement pleine d'un matériau de garnissage, structuré ou désordonné, et l'échange liquide/gaz se fait au sein du garnissage, le liquide et le mélange gazeux parcourant la colonne à co-courant ou à contre-courant.

**2.** Procédé de traitement d'un liquide alimentaire selon la revendication 1, **caractérisé en ce que** le liquide alimentaire traité est un jus de fruit.

**3.** Procédé de traitement d'un liquide alimentaire selon la revendication 1, **caractérisé en ce que** le liquide alimentaire traité est de l'eau, entrant dans la composition d'un jus de fruit.

**4.** Procédé de traitement d'un liquide alimentaire selon l'une des revendications précédentes, **caractérisé en ce que** le mélange gazeux de traitement est de l'hydrogène ou un mélange comportant de l'hydrogène.

**5.** Procédé de traitement d'un liquide alimentaire selon l'une des revendications 1 à 3, **caractérisé en ce que** le mélange gazeux de traitement est un mélange d'hydrogène et de dioxyde de carbone.

**6.** Procédé de traitement d'un liquide alimentaire selon l'une des revendications 1 à 3, **caractérisé en ce que** le mélange gazeux de traitement comprend de l'hydrogène et un gaz complémentaire acceptable du point de vue dudit liquide à traiter.

**7.** Procédé de traitement d'un liquide alimentaire selon la revendication 6, **caractérisé en ce que** le gaz complémentaire est choisi parmi les gaz inertes, notamment argon, hélium, et parmi le dioxyde de carbone et le protoxyde d'azote et leurs mélanges en toutes proportions.

**8.** Procédé de traitement d'un liquide alimentaire selon l'une des revendications précédentes, **caractérisé en ce que** la valeur du potentiel redox atteinte après traitement est négative.

**9.** Procédé de traitement d'un liquide alimentaire selon l'une des revendications précédentes, **caractérisé en ce que** la valeur du potentiel redox atteinte après traitement est inférieure d'au moins 100 mV à la valeur initiale du liquide avant traitement.
